# EUROPÄISCHE PATENTANMELDUNG

(11) **EP 4 813 794 A1**
(43) Veröffentlichungstag der Anmeldung: **30.09.2026**
(21) Anmeldenummer: 26164292.0
(22) Anmeldetag: 12.03.2026
(51) Int. Cl.: B61L 15/00, H04L 12/40

(54) **VERFAHREN ZUM SCHNELLEREN REKONFIGURIEREN EINES ANSCHLUSSGERÄTES UND EIN ANSCHLUSSGERÄT**

(30) Priorität: 28.03.2025 DE 102025112203
(71) Anmelder: KB Intellectual Property GmbH & Co. KG, 82049 Pullach (DE)
(72) Erfinder: BARELLA, Mauro, 33100 Udine (IT)

(57) **Zusammenfassung**

Ein Verfahren zum schnelleren Rekonfigurieren eines Anschlussgerätes (100) für Netzwerk-Verbindungen zwischen gekoppelten Schienenfahrzeugen (10, 10a) entlang einer Hauptrasse (30) ist offenbart. Das Anschlussgerät (100) weist einen ersten Anschluss (101), einen zweiten Anschluss (102) und eine interne Schaltung (110), die in einem Grundzustand mit dem ersten Anschluss (101) und mit dem zweiten Anschluss (102) verbunden ist, auf. Das Anschlussgerät (100) und ein weiteres Anschlussgerät (200) bilden redundante Zugangsknoten für eines der gekoppelten Schienenfahrzeuge (10) zu der Haupttrasse (30). Das Verfahren umfasst die folgenden Schritte: Empfangen einer Fehlermeldung über einen Fehler, der das Anschlussgerät (100) betrifft; Anhalten einer Aktivität der internen Schaltung (110); Senden einer Benachrichtigung an das weitere Anschlussgerät (200) über den Fehler, um eine Übernahme der Aktivität durch das weitere Anschlussgerät (200) zu ermöglichen; Trennen der internen Schaltung (110) von dem ersten Anschluss (101); Trennen der internen Schaltung (110) von dem zweiten Anschluss (102); und Verbinden des ersten Anschlusses (101) mit dem zweiten Anschluss (102).

## Beschreibung

Die vorliegende Erfindung bezieht sich auf ein Verfahren zum schnelleren Rekonfigurieren zumindest eines Anschlussgerätes für Netzwerk-Verbindungen zwischen gekoppelten Schienenfahrzeugen und auf das Anschlussgerät selbst. Insbesondere beziehen sich Ausführungsbeispiele auf eine beschleunigte Rekonfigurationszeit nach einem Fehler an einem der redundanten Anschlussgeräte für Ethernet-Verbindungen zwischen Schienenfahrzeuge.

Für Ethernet-Verbindungen verwenden Schienenfahrzeuge Anschlussknoten (z.B. spezielle Anschlussgeräte), die beispielsweise als ein sogenannter Ethernet Train Backbone Node (ETBN) ausgebildet sein können und einen spezialisierten Ethernet-Router darstellen. Diese Anschlussknoten können über ein definiertes Protokoll, namens TTDP (engl. Train Topology Discovery Protocol, Protokoll zur Erfassung von Zugtopologien), Verbindungen zwischen Schienenfahrzeugen (Zugeinheiten) ermöglichen, wobei die Schienenfahrzeuge miteinander zu einem Zug gekoppelt sein können. Wie zwei oder mehr Schienenfahrzeuge miteinander über eine Ethernet-Verbindung verbunden werden, ist beispielsweise in der internationale Eisenbahnnorm (IEC 61375-2-5) beschrieben, die eine funktionelle Interoperabilität in Bezug auf die Netzwerk-Ethernet-Verbindungen sicherstellt.

Um eine hohe Zuverlässigkeit sicherzustellen, werden ETBN-Anschlussknoten redundant ausgebildet, wobei einer davon in einem Primärmodus (Master) und der andere in einem Sekundärmodus (Slave) arbeiten kann. Wenn sich der ETBN-Master abschaltet, werden seine Funktionen auf den ETBN-Slave übertragen. Hierfür werden entsprechende Umleitungen (Bypässe) geschaltet.

Auf den entsprechenden Netzkabeln führt dieses Schalten zu einer Unterbrechung bestehenden Verbindungen und einer anschließenden sofortigen Wiederverbindung. Hierbei kann es 2 bis 3 Sekunden zu Verbindungsausfällen kommen. Dies ist sehr lange. Bei den Verbindungen kann es beispielsweise um Ethernet-Gigabit-Verbindungen handeln, bei denen in 2 ... 3 Sekunden sehr viele Daten blockiert werden. Mit einigen nicht-standardmäßigen Einstellungen lässt sich diese Zeit zwar auf etwa 300 Millisekunden verringern, dies ist jedoch immer noch viel länger als jene Zeit, die für die Aktivierung der Softwareanwendungen im ETBN-Slave benötigt wird. Diese Aktivierung dauert typischerweise einige zehn Millisekunden.

Daher besteht ein Bedarf nach Möglichkeiten zum schnelleren Rekonfigurieren von Anschlussgeräten.

Zumindest ein Teil der obengenannten Probleme wird durch ein Verfahren zum schnelleren Rekonfigurieren eines Anschlussgerätes nach Anspruch 1 und ein Anschlussgerät nach Anspruch 7 gelöst. Die abhängigen Ansprüche definieren weitere vorteilhafte Ausführungsformen der Gegenstände der unabhängigen Ansprüche.

Die vorliegende Erfindung bezieht sich auf ein Verfahren zum schnelleren Rekonfigurieren (zumindest) eines Anschlussgerätes für Netzwerk-Verbindungen zwischen gekoppelten Schienenfahrzeugen entlang einer Hauptrasse. Das Anschlussgerät umfasst (zumindest) einen ersten Anschluss, einen zweiten Anschluss und eine interne Schaltung, die in einem Grundzustand mit dem ersten Anschluss und mit dem zweiten Anschluss verbunden ist. Das Anschlussgerät und ein weiteres Anschlussgerät bilden redundante Zugangsknoten für eines der gekoppelten Schienenfahrzeuge zu der Haupttrasse. Das Verfahren umfasst:
- Empfangen einer Fehlermeldung über einen Fehler, der das Anschlussgerät betrifft;
- Anhalten einer Aktivität der internen Schaltung;
- Senden einer Benachrichtigung an das weitere Anschlussgerät über den Fehler, um eine Übernahme der Aktivität durch das weitere Anschlussgerät zu ermöglichen;
- Trennen der internen Schaltung von dem ersten Anschluss;
- Trennen der internen Schaltung von dem zweiten Anschluss; und
- Verbinden des ersten Anschlusses mit dem zweiten Anschluss.

Das Fehlermeldung kann ein beliebiges Signal sein, welches insbesondere ein Spannungsausfall oder ein Spannungsabfall anzeigen kann, der ein zuverlässiges Arbeiten des Anschlussgerätes nicht mehr sicherstellen kann. Alternativ oder zusätzlich kann auch ein anderer Fehler durch die Fehlermeldung signalisiert werden, der die Zuverlässigkeit des Anschlussgerätes als Anschlussknoten für die Netzwerk-Verbindung in Frage stellt. Die Fehlermeldung kann beispielsweise über eine der beiden Anschlüsse empfangen werden, es kann aber auch über eine andere Datenverbindung empfangen werden bzw. ein internales Signal sein, welches z.B. den Spannungsabfall signalisiert.

Gemäß Ausführungsbeispielen handelt es sich bei den Netzwerk-Verbindungen insbesondere um Ethernet-Verbindungen und die Haupttrasse ist insbesondere ein Ethernet-Backbone der gekoppelten Schienenfahrzeugen.

Das Verbinden des ersten Anschlusses und des zweiten Anschlusses kann auch gleichzeitig mit dem Trennen von der internen Schaltung erfolgen (z.B. über zumindest einen Schalter). Das Verbinden stellt somit einen Bypass dar, der das Anschlussgerät bzw. die interne Schaltung überbrückt, so dass die potentiell fehlerhafte interne Schaltung infolge des Überbrückens der Netzwerk-Verbindung(en) entkoppelt wird.

Unter dem Begriff eines "Anschlusses" soll jede Möglichkeit verstanden werden, ein Signal in das Anschlussgerät einzugeben oder auszugeben. Es kann, muss aber nicht, eine Steckverbindung oder Lötverbindung umfassen.

Optional umfasst das Anschlussgerät weiter einen dritten Anschluss und einen vierten Anschluss. Die interne Schaltung ist in dem Grundzustand wieder mit dem dritten Anschluss und mit dem vierten Anschluss verbunden. Das Verfahren umfasst dann weiter:
- auf das Empfangen der Fehlermeldung, Trennen der internen Schaltung von dem dritten Anschluss und Trennen der internen Schaltung von dem vierten Anschluss;
- Verbinden des dritten Anschlusses mit dem vierten Anschluss.

Der erste bis vierte Anschluss kann jeweils an eine entsprechende Datenleitung der Haupttrasse koppeln. Diese Datenleitungen bilden redundante Netzwerk-Verbindungen entlang der Haupttrasse. Das Anschlussgerät kann insbesondere ein sogenanntes Ethernet Train Backbone Node (ETBN) sein, welches einen Anschlussknoten für eine Ethernet-Haupttrasse von Schienenfahrzeugen darstellt. Gemäß Ausführungsbeispielen ist die Haupttrasse (sogenannter Backbone) in Schienenfahrzeugen redundant ausgebildet und umfasst daher zumindest zwei Datenleitungen. Die entsprechenden Anschlussknoten (Anschlussgeräte) weisen daher jeweils zwei Eingänge für die zwei Datenleitungen und zwei Ausgänge auf.

Das Verbinden des dritten Anschlusses mit dem vierten Anschluss kann optional ohne zeitlichen Verzug bzw. unmittelbar erfolgen, sodass die interne Schaltung infolge der Überbrückung der dritten und vierten Datenleitung von dem Fehler entkoppelt wird und die überbrückte Datenleitung ohne zeitlichen Verzug für eine Kommunikation zur Verfügung steht. Die zu diesem Zeitpunkt eventuell noch nicht überbrückte erste Datenleitung und zweite Datenleitung können genutzt werden, um ein geregeltes Abschalten des Anschlussgerätes zu ermöglichen und andere Geräte darüber zu informieren.

Optional erfolgt daher das Verbinden des ersten Anschlusses mit dem zweiten Anschluss mit einem zeitlichen Verzug im Vergleich zum Verbinden des dritten Anschlusses mit dem vierten Anschluss.

Optional umfasst das Verfahren weiter zumindest eines aus dem Folgenden:
- Aktivieren einer Ersatzspannungsversorgung;
- Abschalten des Anschlussgerätes;
- Betreiben der internen Schaltung in einem Primärmodus (master);
- Betreiben der internen Schaltung in einem Sekundärmodus (slave);
- Überwachen eines Anschlussgerätes im Primärmodus durch ein weiteres Anschlussgerät im Sekundärmodus;
- Auslösen der Fehlermeldung, wenn das weitere Anschlussgerät im Sekundärmodus einen Fehler beim Anschlussgerätes im Primärmodus feststellt;
- auf ein Empfangen oder beim Aussenden einer Fehlermeldung, Wechseln von dem Sekundärmodus in den Primärmodus;
- beim Betreiben im Sekundärmodus und auf ein Empfangen der Fehlermeldung über die erste Datenleitung oder über die zweite Datenleitung, Verwenden der (überbrückten) dritten Datenleitung und der vierten Datenleitung für die Netzwerk-Verbindung (z.B. für weitere Anschlussgeräte);
- Abwarten für zumindest eine vorbestimmte Zeitdauer.

Es versteht sich, dass die zeitliche Reihenfolge der einzelnen Schritte beliebig gewählt sein kann, sofern der zugrundeliegende technische Effekt erreichbar ist. Die Schritte können aber auch genau in der genannten Reihenfolge ausgeführt werden, müssen es aber nicht. Außerdem kann der Schritt des Abwartens zwischen jedem der definierten Schritte oder nur vor einigen davon erfolgen. Auch die vorbestimmten Zeitdauern können für die einzelnen Abwarte-Schritte verschieden oder gleich gewählt sein. Hierdurch kann sichergestellt werden, dass die Schritte vollständig und fehlerfrei ausgeführt werden können und dass erst nach entsprechender Rückmeldung oder Bestätigung zum Beispiel das Abschalten des Anschlussgerätes erfolgt.

Die Ersatzspannungsversorgung kann beispielhaft von einem separaten Energiespeicher erfolgen, der in dem Anschlussgerät oder extern vorhanden ist, auf den aber das Anschlussgerät zugreifen kann. Damit soll sichergestellt sein, dass noch ausreichend Strom zur Verfügung steht, um die Schritte auszuführen, so dass ein geregeltes Herunterfahren des Anschlussgerätes ermöglicht wird.

Der Primärmodus und Sekundärmodus können beispielsweise über Master-Slave-Netzwerk-Konfigurationen implementiert sein, wobei der Primärmodus dem Master-Modus entspricht und der Sekundärmodus dem Slave-Modus entspricht. In dem Primärmodus wird daher von dem Anschlussgerät die Zugangsfunktionen zu dem Zugnetzwerk bereitgestellt. Das Anschlussgerät im Sekundärmodus dient lediglich als Hilfsgerät bzw. als ein Ersatzanschlussgerät, welches die Funktionen des Primärgerätes übernimmt, wenn ein Fehler detektiert wurde. Im Sekundärmodus kann auch eine Überwachung anderer Geräte wie den Anschlussgeräten im Primärmodus durchgeführt werden.

Optional umfasst das Verfahren weiter ein Senden einer Benachrichtigung an das weitere Anschlussgerät über das Abschalten des Anschlussgerätes.

Ausführungsbeispiele beziehen sich auch auf das Anschlussgerät für Ethernet-Verbindungen entlang einer Hauptrasse zwischen gekoppelten Schienenfahrzeugen mit einer ersten Datenleitung und einer zweiten Datenleitung. Das Anschlussgerät bildet einen Zugangsknoten für eines der gekoppelten Schienenfahrzeuge zu der Haupttrasse und weist Folgendes auf:
- einen ersten Anschluss für die erste Datenleitung;
- einen zweiten Anschluss für die zweite Datenleitung;
- eine interne Schaltung zum Implementieren des Netzwerk-Zugangs des einen gekoppelten Schienenfahrzeugs;
- einen ersten Schalter, der in einer Standardstellung die interne Schaltung mit dem ersten Anschluss verbindet;
- einen zweiten Schalter, der in einer Standardstellung die interne Schaltung und dem zweiten Anschluss verbindet, wobei in der jeweils aktivierten Stellung des ersten Schalters und des zweiten Schalters der erste Anschluss mit dem zweiten Anschluss verbindbar sind; und
- ein Steuergerät zum Ausführen der Schritte eines Verfahrens, wie es in dieser Offenbarung beschrieben wurde.

Das Verfahren oder zumindest Teile davon kann/können ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor läuft. Daher bezieht sich die vorliegende Erfindung ebenfalls auf Computerprogrammprodukt oder auf ein maschinelesbares Medium mit darauf gespeichertem Software-Code (Anweisungen), der ausgebildet ist, um eines der zuvor beschriebenen Verfahren auszuführen, wenn die Anweisungen durch eine Verarbeitungseinheit (z.B. das Steuergerät) ausgeführt werden. Die Datenverarbeitungseinheit kann jede Form von Computer oder das Steuergerät sein, die einen entsprechenden Mikroprozessor aufweist, der einen Software-Code ausführen kann.

Optional umfasst die Haupttrasse weiter eine dritte Datenleitung parallel zu der ersten Datenleitung und eine vierte Datenleitung parallel zu der zweiten Datenleitung, um redundante Netzwerk-Verbindungen entlang der Haupttrasse zu ermöglichen. Das Anschlussgerät weist weiter Folgendes auf:
- einen dritten Anschluss für die dritte Datenleitung,
- einen vierten Anschluss für die vierte Datenleitung,
- einen dritten Schalter, der in einer Standardstellung die interne Schaltung mit dem dritten Anschluss verbindet;
- einen vierten Schalter, der in einer Standardstellung die interne Schaltung und dem vierten Anschluss verbindet, wobei in der jeweils aktivierten Stellung des dritten Schalters und des vierten Schalters der dritte Anschluss mit dem vierten Anschluss verbindbar sind.

Optional weist das Anschlussgerät zumindest eines aus dem Folgenden auf:
- eine Ersatzspannungsversorgung zum Bereitstellen einer Ersatzstromversorgung, um eine Arbeitsfähigkeit des Anschlussgerätes für eine vorbestimmte Zeit aufrechtzuerhalten,
- einen Fahrzeuganschluss zum Bereitstellen einer Netzwerk-Verbindung für das eine gekoppelte Schienenfahrzeug;
- einen Anschluss für eine externe Spannungsversorgung, um eine reguläre Spannungsversorgung für das Anschlussgerät bereitzustellen.

Ausführungsbeispiele beziehen sich auch auf ein Schienenfahrzeug mit einem ersten Anschlussgerät und einem zweiten Anschlussgerät, um redundante Netzwerk-Verbindungen mittels einer Haupttrasse bereitzustellen. Das erste und zweiten Anschlussgerät können baugleich sein. Beide Anschlussgeräte können so ausgebildet sein, wie es in dieser Offenbarung beschrieben wurde. Beide Anschlussgeräte können aber unterschiedlich konfiguriert sein. Beispielsweise kann eines im Primärmodus konfiguriert sein und das andere im Sekundärmodus.

Es versteht sich, dass alle zuvor beschriebenen Funktionen des Steuergerätes als weitere optionale Verfahrensschritte gemäß Ausführungsbeispielen ausgebildet sein können. Außerdem versteht es sich, dass die Reihenfolge der Nennung nicht notwendigerweise eine Reihenfolge bei der Ausführung der Verfahrensschritte ist. Die Schritte können auch in einer anderen Reihenfolge ausgeführt werden bzw. es wird nur ein Teil der Verfahrensschritte ausgeführt.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein schematisches Flussdiagramm für ein Verfahren zum schnelleren Rekonfigurieren eines Anschlussgerätes gemäß einem Ausführungsbeispiel der vorliegenden Erfindung.
- Fig. 2: zeigt ein Anschlussgerät für Netzwerk-Verbindungen gemäß Ausführungsbeispielen.
- Fig. 3: zeigt eine Darstellung einer Topologie für Netzwerk-Verbindungen in einem Verbund von Schienenfahrzeugen, wie sie in Ausführungsbeispielen genutzt wird.

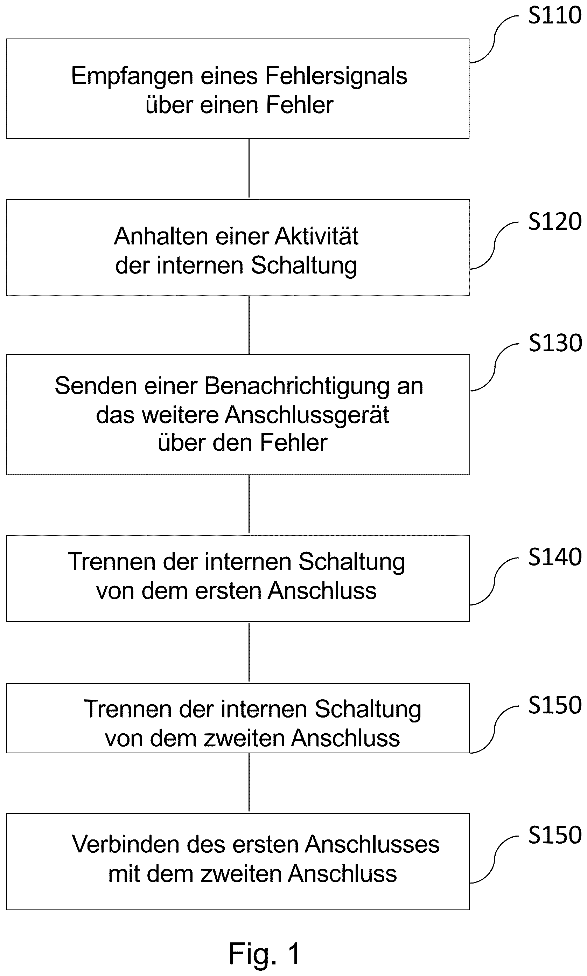

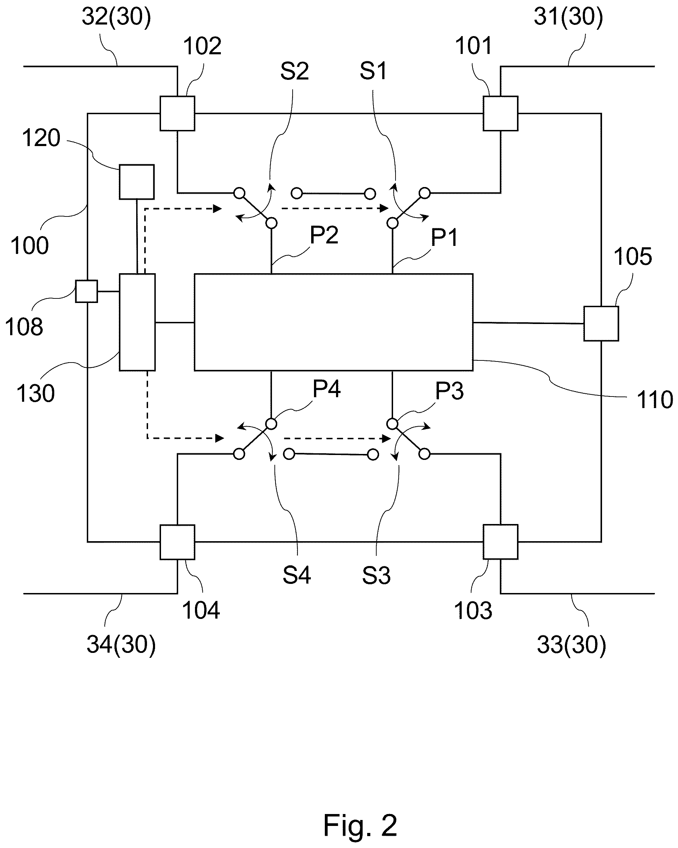

**Fig. 1** zeigt ein schematisches Flussdiagramm für ein Verfahren zum schnelleren Rekonfigurieren eines Anschlussgerätes (siehe **Fig. 2** unten) für Netzwerk-Verbindungen zwischen gekoppelten Schienenfahrzeugen. Das Verfahren umfasst:
- Empfangen eine Fehlermeldung über einen Fehler, der das Anschlussgerät betrifft;
- Anhalten einer Aktivität einer internen Schaltung;
- Senden einer Benachrichtigung an ein weiteres Anschlussgerät über den Fehler, um eine Übernahme der Aktivität durch das weitere Anschlussgerät zu ermöglichen;
- Trennen der internen Schaltung von einem ersten Anschluss;
- Trennen der internen Schaltung von einem zweiten Anschluss; und
- Verbinden des ersten Anschlusses mit dem zweiten Anschluss.

Es versteht sich, dass alle Funktionen des Anschlussgerätes oder seiner Komponenten als weitere optionale Verfahrensschritte ausgebildet sein können. Außerdem versteht es sich.

**Fig.** 2 zeigt ein Anschlussgerät 100 gemäß einem Ausführungsbeispiel der vorliegenden Erfindung. Das Anschlussgerät 100 umfasst einen ersten Anschluss 101, einen zweiten Anschluss 102, einen dritten Anschluss 103 und einen vierten Anschluss 104. Der erste Anschluss 101 ist mit einer ersten Datenleitung 31 verbindbar, der zweite Anschluss 102 ist mit einer zweiten Datenleitung 32 verbindbar, der dritte Anschluss 103 ist mit einer dritten Datenleitung 33 verbindbar und der vierte Anschluss 104 ist mit einer vierten Datenleitung 34 verbindbar. Die erste Datenleitung 31 und zweite Datenleitung 32 stellen eine Netzwerk-Verbindungsleitung dar. Die dritte Datenleitung 33 und die vierte Datenleitung 34 sind vorgesehen für die dazu redundant ausgebildete zweite Netzwerk-Verbindung. Die redundant ausgebildeten Netzwerk-Verbindungen können Teil einer Haupttrasse 30 (Ethernet backbone) sein und verschiedene gekoppelte Schienenfahrzeuge verbinden.

Gemäß Ausführungsbeispielen umfasst das Anschlussgerät 100 weiter einen Fahrzeuganschluss 105 und einen Versorgungsanschluss 107. Mit dem Fahrzeuganschluss 105 kann eine Verbindung zu einem zugehörigen Schienenfahrzeug hergestellt werden. Bei der Verbindung handelt es ich beispielsweise um eine Ethernet Datenverbindung mittels der Datenleitungen 31, 32, 33, 34, wobei das Anschlussgerät 100 dann als Zugangsknoten dient. Der Versorgungsanschluss 107 dient der Spannungsversorgung des Anschlussgerätes 100 und seiner Komponenten mit einer externen Spannungsquelle (z.B. die des Schienenfahrzeuges).

Gemäß Ausführungsbeispielen umfasst das Anschlussgerät 100 weiter (zumindest) eine interne Schaltung 110, die vier Ports aufweist: einen ersten Port P1, einen zweiten Port P2, einen dritten Port P3 und einen vierten Port P4. Außerdem umfasst das Anschlussgerät 100 einen ersten Schalter S1, der dem ersten Port P1 der internen Schaltung 110 zugeordnet ist, einen zweiten Schalter S2, der dem zweiten Port P2 zugeordnet ist, einen dritten Schalter S3, der dem dritten Port P3 zugeordnet ist und einen vierten Schalter S4, der dem vierten Port P4 der internen Schaltung 110 zugeordnet ist. Die vier Ports P1, P2, P3, P4 dienen als Anschluss der internen Schaltung 110 an die vier Datenleitungen 31, 32, 33, 34 des redundanten Netzwerks. Dementsprechend ist die interne Schaltung 110 ausgebildet, um zumindest eine Zugangsfunktionalität des zugehörigen Schienenfahrzeuges zu dem redundanten Netzwerk zur Verfügung zu stellen.

Gemäß Ausführungsbeispielen umfasst das Anschlussgerät 100 eine Hilfsspannungsquelle 120 und ein Steuergerät 130.

Die Hilfsspannungsquelle 120 dient einer Spannungsversorgung für das Anschlussgerät 100 und seiner Komponenten, beispielsweise wenn die externe Spannungsversorgung über den Versorgungsanschluss 107 ausfällt. Gemäß Ausführungsbeispielen ist die Hilfsspannungsquelle 120 in der Lage, zumindest einige oder alle Funktionen des Anschlussgerätes 100 für zumindest eine vorbestimmte Zeitdauer aufrechtzuhalten. Die vorbestimmte Zeitdauer kann beispielsweise 0,5 s, 1 s, 2 s, 3 s, 5 s sein. Um dies zu erreichen, kann die Hilfsspannungsquelle 120 beispielsweise einen oder mehrere Kondensatoren, eine Batterie oder andere Stromspeicher aufweisen.

Das Steuergerät 130 ist ausgebildet, um die Schalter S1 bis S4 über Steuerleitungen (gestrichelte Linien in **Fig. 2**) anzusteuern, wobei die Schalter S1 bis S4 jeweils eine Standardposition aufweisen, d.h. eine voreingestellte (default) Position in Abwesenheit einer konkreten Ansteuerung einnehmen. Die Standpositionen definieren einen Grundzustand für die Verschaltung, der wie folgt definiert ist. Standardmäßig verbindet der erste Schalter S1 die erste Datenleitung 31 mit dem ersten Port P1, der zweite Schalter S2 die zweite Datenleitung 32 mit dem zweiten Port P2, der dritte Schalter S3 die dritte Datenleitung 33 mit dem dritten Port P3 und der vierte Schaltung S4 die vierte Datenleitung 34 mit dem vierten Port P4.

Die vier Schalter S1, S2, S3, S4 dienen dem Überbrücken der internen Schaltung 110 bzw. dem Durchleiten der Datenverbindungen entlang der ersten Datenleitungen 31, 32 (durch den ersten und zweiten Schalter S1, S2), bzw. dem Durchleiten von Datenverbindungen entlang der dritten und vierten Datenleitungen 33, 34 (durch den dritten und vierten Schalter S3, S4). Dies wird insbesondere im Fehlerfall durchgeführt. Gemäß Ausführungsbeispielen ist daher das Steuergerät 130 ausgebildet, um auf ein Empfangen einer Fehlermeldung die vier Schalter S1, S2, S3, S4 zu betätigen, sodass ein Durchleiten von Daten zwischen der ersten Datenleitung 31 und der zweiten Datenleitung 32 bzw. zwischen der dritten Datenleitung 33 und der vierten Datenleitung 34 erfolgt. Die Hilfsspannungsquelle 120 stellt dabei sicher, dass im Fehlerfall (z.B. bei einem Stromausfall), das Steuergerät 130 für das Überbrücken der Datenleitungen 31 bis 34 noch ausreichend Strom zur Verfügung steht.

Gemäß Ausführungsbeispielen schaltet das Steuergerät 130 die Schalter S1 bis S4 wie folgt. Wenn das Steuergerät 130 die Fehlermeldung empfängt, wird zunächst die internen Schaltung 110 von dem dritten Anschluss 103 durch ein Betätigen des dritten Schalters S3 getrennt. Außerdem wird die internen Schaltung 110 von dem vierten Anschluss 104 durch ein Betätigen des vierten Schalters S4 getrennt und mit dem dritten Anschluss 103 verbunden. Somit werden die Daten zwischen der dritten Datenleitung 33 und der zweiten Datenleitung 34 durchgeleitet. Gemäß Ausführungsbeispielen werden diese Schaltoperationen ohne zeitlichen Verzug durchgeführt, d.h. so wie möglich nach dem Empfang der Fehlermeldung.

Gemäß Ausführungsbeispielen erfolgen weitere Schaltoperationen mit einem zeitlichen Verzug, d.h. nicht sofort auf das Empfangen der Fehlermeldung. Bei diesen weiteren Schaltoperationen wird die internen Schaltung 110 von dem ersten Anschluss 101 durch ein Betätigen des ersten Schalters S1 getrennt. Außerdem wird bei den weiteren Schaltoperationen die internen Schaltung 110 von dem zweiten Anschluss 102 durch ein Betätigen des zweiten Schalters S2 getrennt und mit dem ersten Anschluss 101 verbunden. Somit werden daran anschließend die Daten zwischen der ersten Datenleitung 31 und der zweiten Datenleitung 32 weitergeleitet.

Gemäß Ausführungsbeispielen wird der zeitliche Verzug zu den weiteren Schaltoperation genutzt, um eine oder mehrere der folgenden Operationen auszuführen:
- Anhalten einer Aktivität der internen Schaltung 110;
- Senden einer Fehlerbenachrichtigung über die noch vorhandene Datenverbindung (z.B. an weitere Anschlussgeräte), um eine Übernahme der Aktivität durch ein anderes Anschlussgerät zu ermöglichen;
   - Aktivieren der Ersatzspannungsversorgung 120;
   - Abschalten des Anschlussgerätes 100 bzw. der internen Schaltung 110,
   - Senden einer Benachrichtigung über das (bevorstehende) Abschalten des Anschlussgerätes 100 bzw. der internen Schaltung 110, z.B. über die noch vorhandene Datenverbindung (z.B. an weitere Anschlussgeräte).

Die Reihenfolge kann wieder beliebig gewählt werden.

Zwischen jedem der genannten Operation kann ein Abwarten für eine Operationsabhängige Zeitdauer ausgeführt werden. Die Zeitdauer kann für jede der genannten Operationen anders sein. Sie kann auch Null sein. Die betreffenden Schritte können daher auch ohne zeitlichen Verzug oder auch parallel ausgeführt werden.

Gemäß Ausführungsbeispielen werden daran anschließend die weiteren Schaltoperationen ausgeführt. Gemäß Ausführungsbeispielen kann also der zeitliche Verzug so gewählt, dass die ausgeführten Operationen auch ausgeführt werden können.

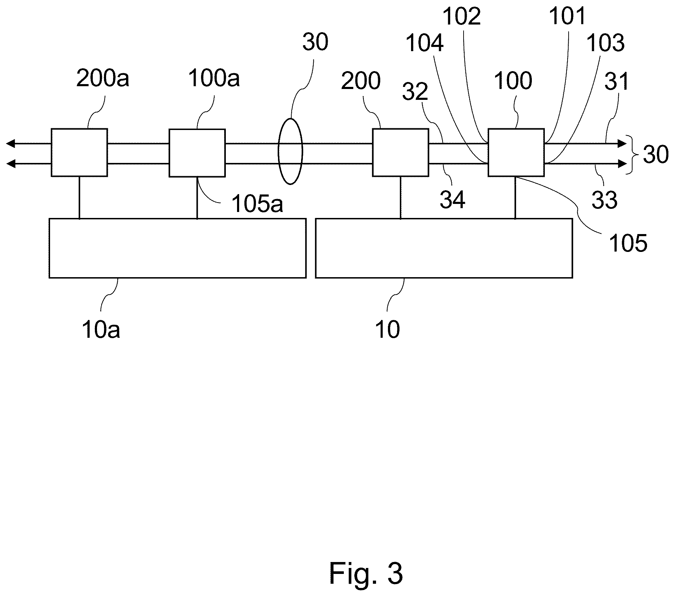

**Fig. 3** zeigt ein Ausführungsbeispiel für die Verwendung des Anschlussgerätes 100 in einer Schienenfahrzeugkombination mit einem Schienenfahrzeug 10 und einem weiteren Schienenfahrzeug 10a. Gemäß Ausführungsbeispielen ist jedes Schienenfahrzeug mit zwei Anschlussgeräten 100, 200 (bzw. 100a und 200a) ausgestattet, um das jeweilige Schienenfahrzeug mit der Haupttrasse 30 für die Netzwerk-Verbindungen zu verbinden. Alle Anschlussgeräte 100, 200, 100a, 200a können gleich aufgebaut sein und können die gleichen Funktionen bereitstellen, wie sie zuvor beschrieben wurden (siehe Beschreibung zu **Fig. 2****).** Jedes Schienenfahrzeug 10, 10a koppelt daher an ein Anschlussgerät 100, 200, wie es mit der **Fig. 2** beschrieben wurde, und an ein weiteres Anschlussgerät 100a, 200a, das gemäß Ausführungsbeispielen anders konfiguriert ist. Die Haupttrasse 30 umfasst die redundanten Datenleitungen 31, 32, 33, 34, wie sie zuvor beschrieben wurden.

Gemäß Ausführungsbeispielen sind die Anschlussgeräte 100, 200 (bzw. 100a, 200a) redundant ausgebildet, um auch bei Ausfall eines Anschlussgerätes 100, 200 oder bei einem Spannungsverlust einen sicheren Zugang zur Haupttasse 30 zu ermöglichen. Zur Implementierung der Redundanz sind die Anschlussgeräte 100, 200 (bzw. 100a, 200a) oder die darin vorhandenen Steuergeräte 130 ausgebildet, um eine oder mehrere der folgenden Funktionen bereitzustellen:
- Betreiben der internen Schaltung 110 in einem Primärmodus (master);
- Betreiben der internen Schaltung 110 in einem Sekundärmodus (slave);
- auf ein Empfangen einer Fehlermeldung, Wechseln von dem Sekundärmodus in den Primärmodus;
- beim Betreiben im Sekundärmodus und auf ein Empfangen einer Fehlermeldung über die erste Datenleitung 31 oder über die zweite Datenleitung 32, Verwenden der dritten Datenleitung 33 und der vierten Datenleitung 34 für die Netzwerk-Verbindung

Gemäß Ausführungsbeispielen sind die Anschlussgeräte 100, 100a für die dazugehörigen Schienenfahrzeuge 10, 10a beispielsweise jeweils im Primärmodus (master) konfiguriert und die weiteren Anschlussgeräte 200, 200a im Sekundärmodus (slave) konfiguriert. Der Sekundärmodus kann beispielsweise keine aktive Zugangsfunktionalität zur Haupttrasse 30 bereitstellen, sondern definiert einen Standby-Modus, um die Funktionalität des primären Anschlussgerätes beim Vorliegen eines Fehlers zu übernehmen. Außerdem können die weiteren Anschlussgerät 100a, 200a (im Sekundärmodus) ausgebildet sein, um das Anschlussgerät 100, 200 (im Primärmodus) zu beobachten bzw. die Funktionen zu überwachen und, bei Fehlfunktionen, einzugreifen. Beispielsweise kann im Sekundärmodus die Fehlermeldung ausgegeben werden, wenn das überwachte Anschlussgerät 100, 200 fehlerhaft arbeitet.

Gemäß Ausführungsbeispielen kann daher eines der weiteren Anschlussgeräte 100a, 200a das Rekonfigurieren auslösen. Das Rekonfigurieren umfasst - wie bereits beschrieben - ein Abschalten des fehlerhaften Anschlussgerätes 100, 200 (im Primärmodus) und eine Übernahme der Funktion durch das betreffende weitere Anschlussgerät 100a, 200a, welches daraufhin aus dem Sekundärmodus in den Primärmodus wechselt.

Gemäß Ausführungsbeispielen kann das Aussenden der Fehlermeldung auch durch einen Ausfall der externen Stromversorgung ausgelöst werden. Wenn beispielsweise das Anschlussgeräte 100 den Stromausfall feststellt, kann es die Fehlermeldung aussenden und/oder das Rekonfigurieren gemäß Ausführungsbeispielen veranlassen. Beispielsweise kann eine interne Stromversorgung die Fehlermeldung aussenden (z.B. an das Steuergerät 130), woraufhin das Rekonfigurieren des Anschlussgerätes 100 wie folgt ausgeführt wird:
- Schließen einer Überbrückung auf einer der beiden Leitungen,
- Schließen oder Beenden von spezifischen Aktivitäten,
- das weitere Anschlussgerät 200 (im Sekundärmodus) darüber informieren, dass das Anschlussgerät 100 (im Primärmodus) offline ist,
- eine vorbestimmte Zeitdauer warten,
- die andere Überbrückung schließen
- das Anschlussgerät 100, 200 herunterfahren.

Gemäß Ausführungsbeispielen umfasst die Kombination aus Schienenfahrzeugen ein zugweites Ethernet-Netzwerk (z.B. ein Backbone-Ethernet), auf das die Zugeinheiten durch die Anschlussgeräte 100, 200, 100a, 200a Zugriff haben und somit miteinander kommunizieren können. Wenn beispielsweise das Schienenfahrzeug 10 über eine normdefinierte spezifische IP-Adressierung mit dem Schienenfahrzeugs 10a über eine Verbindung kommunizieren möchte, läuft die Kommunikation über die Datenleitung vom Schienenfahrzeug 10 zum Fahrzeuganschluss 105 des Anschlussgerätes 100, welches im Primärmodus arbeitet. Von dort wird die Verbindung zum Anschlussgerät 100a des weiteren Schienenfahrzeug 10a, welches ebenfalls im Primärmodus arbeitet, weitergeleitet. Das Anschlussgerät 100a stellt schließlich über seinen Fahrzeuganschluss 105a die Kommunikationsverbindung zu dem weiteren Schienenfahrzeug 10a her.

Wenn eines der Anschlussgeräte 100, 100a im Primärmodus ausfällt oder ausgeschaltet wird, werden gemäß Ausführungsbeispielen seine Funktionen von dem betreffenden weiteren Anschlussgerät 100, 100a im Sekundärmodus übernommen und die Kommunikation wird wiederhergestellt. Um dieses Verhalten zu erreichen, werden gemäß Ausführungsbeispielen die Netzwerkleitungen 31, 32, 33, 34, die in die Anschlussgeräte 100, 200, 100a, 200a hereinlaufen und herauslaufen, mit der beschriebenen Verschaltung überbrückt, wie es mit der **Fig. 2** beschrieben wurde. Im Falle eines Ausfalls oder einer Abschaltung kann so eine kontinuierliche Datenweiterleitung auf den beiden Netzwerkleitungen 31, 33 oder 32, 34 (backbone-Netzwerkkabel) aufrechterhalten wird.

Ausführungsbeispiele bieten den Vorteil, dass mit dem Verfahren die gemessene Zeit für die gesamte Netzwerk-Rekonfiguration, d. h. die Zeit, in der eine laufende Kommunikation gestoppt wird, auf 50 bis 100 ms reduziert werden kann.

Die in der Beschreibung, den Ansprüchen und den Figuren offenbarten Merkmale der Erfindung können sowohl einzeln als auch in beliebiger Kombination für die Verwirklichung der Erfindung wesentlich sein.

### BEZUGSZEICHENLISTE

- 10: Schienenfahrzeug
- 30: Hauptrasse (backbone)
- 31: erste Datenleitung
- 32: zweite Datenleitung
- 33: dritte Datenleitung
- 34: vierte Datenleitung
- 100,100a: Anschlussgerät(e) (z.B. im Primärmodus oder ein Master)
- 101: erster Anschluss
- 102: zweiter Anschluss
- 103: dritter Anschluss
- 104: vierter Anschluss
- 105: Fahrzeuganschluss
- 107: externe Spannungsversorgung
- 110: interne Schaltung
- 120: Ersatzspannungsversorgung
- 130: Steuergerät
- 200,200a: weitere/s Anschlussgerät/e (z.B. im Sekundärmodul oder ein Slave)
- P1: erster Port
- P2: zweiter Port
- P3: dritter Port
- P4: vierter Port
- S1: erster Schalter
- S2: zweiter Schalter
- S3: dritter Schalter
- S4: vierter Schalter

## Patentansprüche

1. Verfahren zum schnelleren Rekonfigurieren eines Anschlussgerätes (100) für Netzwerk-Verbindungen zwischen gekoppelten Schienenfahrzeugen (10, 10a) entlang einer Hauptrasse (30), wobei das Anschlussgerät (100) einen ersten Anschluss (101), einen zweiten Anschluss (102) und eine interne Schaltung (110), die in einem Grundzustand mit dem ersten Anschluss (101) und mit dem zweiten Anschluss (102) verbunden ist, aufweist, und wobei das Anschlussgerät (100) und ein weiteres Anschlussgerät (200) redundante Zugangsknoten für eines der gekoppelten Schienenfahrzeuge (10) zu der Haupttrasse (30) bilden,
**gekennzeichnet durch**
- Empfangen einer Fehlermeldung über einen Fehler, der das Anschlussgerät (100) betrifft;
- Anhalten einer Aktivität der internen Schaltung (110);
- Senden einer Benachrichtigung an das weitere Anschlussgerät (200) über den Fehler, um eine Übernahme der Aktivität durch das weitere Anschlussgerät (200) zu ermöglichen;
- Trennen der internen Schaltung (110) von dem ersten Anschluss (101);
- Trennen der internen Schaltung (110) von dem zweiten Anschluss (102); und
- Verbinden des ersten Anschlusses (101) mit dem zweiten Anschluss (102).

2. Verfahren nach Anspruch 1, wobei das Anschlussgerät (100) weiter einen dritten Anschluss (103) und einen vierten Anschluss (104) aufweist, und wobei die interne Schaltung (110) in dem Grundzustand ebenfalls mit dem dritten Anschluss (103) und mit dem vierten Anschluss (104) verbunden ist, das Verfahren umfasst weiter:
- auf das Empfangen der Fehlermeldung, Trennen der internen Schaltung (110) von dem dritten Anschluss (103) und Trennen der internen Schaltung (110) von dem vierten Anschluss (104);
- Verbinden des dritten Anschlusses (103) mit dem vierten Anschluss (104).

3. Verfahren nach Anspruch 2, wobei das Verbinden des ersten Anschlusses (101) mit dem zweiten Anschluss (102) mit einem zeitlichen Verzug im Vergleich zum Verbinden des dritten Anschlusses (103) mit dem vierten Anschluss (104) erfolgt.

4. Verfahren nach einem der Ansprüche 1 bis 3, das weiter zumindest eines aus dem Folgenden aufweist:
- Aktivieren einer Ersatzspannungsversorgung (120);
- Abschalten des Anschlussgerätes (100);
- Betreiben der internen Schaltung (110) in einem Primärmodus;
- Betreiben der internen Schaltung (110) in einem Sekundärmodus;
- Überwachen eines Anschlussgerätes (100) im Primärmodus durch ein weiteres Anschlussgerät (200) im Sekundärmodus;
- Auslösen der Fehlermeldung, wenn das weitere Anschlussgerät (200) im Sekundärmodus einen Fehler beim Anschlussgerätes (100) im Primärmodus feststellt;
- auf ein Empfangen oder beim Aussenden einer Fehlermeldung, Wechseln von dem Sekundärmodus in den Primärmodus;
- beim Betreiben im Sekundärmodus und auf ein Empfangen einer Fehlermeldung über den ersten Anschluss (101) oder über den zweiten Anschluss (102), Verwenden des dritten Anschlusses (103) und des vierten Anschlusses (104) nach Anspruch 2 für die Netzwerk-Verbindung;
- Abwarten für zumindest eine vorbestimmte Zeitdauer.

5. Verfahren nach Anspruch 4, soweit rückbezogen auf Anspruch 2, das weiter Folgendes aufweist: Senden einer Benachrichtigung an das weitere Anschlussgerät (200) über das Abschalten des Anschlussgerätes (100).

6. Maschinenlesbares Speichermedium mit darauf gespeicherten Anweisungen, die ausgebildet sind, um das Verfahren nach einem der Ansprüche 1 bis 5 auszuführen, wenn die Anweisungen auf einer Datenverarbeitungseinheit ausgeführt werden.

7. Anschlussgerät (100) für Netzwerk-Verbindungen entlang einer Hauptrasse (30) zwischen gekoppelten Schienenfahrzeugen (10, 10a) mit einer ersten Datenleitung (31) und einer zweiten Datenleitung (32), wobei das Anschlussgerät (100) einen Zugangsknoten für eines der gekoppelten Schienenfahrzeuge (10) zu der Haupttrasse (30) bildet,
**gekennzeichnet durch**
- einen ersten Anschluss (101) für die erste Datenleitung (31);
- einen zweiten Anschluss (102) für die zweite Datenleitung (32);
- eine interne Schaltung (110) zum Implementieren des Netzwerk-Zugangs des einen gekoppelten Schienenfahrzeugs (10);
- einen ersten Schalter (S1), der in einer Standardstellung die interne Schaltung (110) mit dem ersten Anschluss (101) verbindet;
- einen zweiten Schalter (S2), der in einer Standardstellung die interne Schaltung (110) und dem zweiten Anschluss (102) verbindet, wobei in der jeweils aktivierten Stellung des ersten Schalters (S1) und des zweiten Schalters (S2) der erste Anschluss (101) mit dem zweiten Anschluss (102) verbindbar sind; und
- ein Steuergerät (130) zum Ausführen der Schritte des Verfahren nach Anspruch 1.

8. Anschlussgerätes (100) nach Anspruch 7, wobei die Haupttrasse (30) weiter eine dritte Datenleitung (33) parallel zu der ersten Datenleitung (31) und eine vierte Datenleitung (34) parallel zu der zweiten Datenleitung (32) aufweist, um redundante Netzwerk-Verbindungen entlang der Haupttrasse (30) zu ermöglichen, und wobei das Anschlussgerät (100) weiter Folgendes aufweist:
- einen dritten Anschluss (103) für die dritte Datenleitung (33),
- einen vierten Anschluss (104) für die vierte Datenleitung (34),
- einen dritten Schalter (S3), der in einer Standardstellung die interne Schaltung (110) mit dem dritten Anschluss (103) verbindet;
- einen vierten Schalter (S4), der in einer Standardstellung die interne Schaltung (110) und dem vierten Anschluss (104) verbindet, wobei in der jeweils aktivierten Stellung des dritten Schalters (S3) und des vierten Schalters (S4) der dritte Anschluss (103) mit dem vierten Anschluss (104) verbindbar sind,
wobei das Steuergerät (130) ausgebildet ist, um das Verfahren nach einem der Ansprüche 2 bis 5 auszuführen.

9. Anschlussgerät (100) nach Anspruch 7 und Anspruch 8, welches zumindest eines aus dem Folgenden aufweist:
- eine Ersatzspannungsversorgung (120) zum Bereitstellen einer Ersatzspannungsversorgung, um eine Arbeitsfähigkeit des Anschlussgerätes (100) für eine vorbestimmte Zeit aufrechtzuerhalten,
- einen Fahrzeuganschluss (105) zum Bereitstellen einer Netzwerk-Verbindung für das eine gekoppelte Schienenfahrzeug (10);
- einen Anschluss (107) für eine externe Spannungsversorgung, um eine reguläre Spannungsversorgung für das Anschlussgerät (100) bereitzustellen.

10. Schienenfahrzeug mit:
- einem ersten Anschlussgerät (100) nach einem der Ansprüche 7 bis 9 und
- einem zweiten Anschlussgerät (200) nach einem der Ansprüche 7 bis 9, um redundante Netzwerk-Verbindungen zu einer Haupttrasse (30) bereitzustellen.
